Europäisches Patentamt

European Patent Office

Office européen des brevets

(19)

(11) Veröffentlichungsnummer: **0 107 229**
A1

(12) # EUROPÄISCHE PATENTANMELDUNG

(21) Anmeldenummer: 83201401.3

(22) Anmeldetag: 30.09.83

(51) Int. Cl.³: **F 27 D 1/04**, C 03 B 5/23, F 28 F 21/04, F 28 D 17/02

(30) Priorität: 11.10.82 AT 3752/82

(43) Veröffentlichungstag der Anmeldung: 02.05.84
Patentblatt 84/18

(84) Benannte Vertragsstaaten: BE DE FR GB IT

(71) Anmelder: Veitscher Magnesitwerke-Actien-Gesellschaft, Schubertring 10-12, A-1010 Wien (AT)

(72) Erfinder: Richter, Hans, Otto Weininger-Gasse 6, A-1130 Wien (AT)

(74) Vertreter: Kliment, Peter, Dipl.-Ing.Mag.-iur. et al, Singerstrasse 8, A-1010 Wien (AT)

(54) **Feuerfester, prismatischer Hohlstein für den Gitterbesatz der Kammern regenerativ beheizter Öfen.**

(57) Ein feuerfester, prismatischer Hohlstein (7) für den Gitterbesatz der Kammern regenerativ beheizter Öfen, insbesondere Glasschmelzöfen, besitzt eine achteckige Grund- und Deckfläche, vorzugsweise scharfkantige Längskanten und koaxial zur Längsachse einen durchgehenden Kanal (8) mit einem rechteckigen, gegebenenfalls abgerundete oder abgeschrägte Ecken aufweisenden Querschnitt. Zur Durchwirbelung der Luft bzw. des Abgases zwecks Verbesserung des Wärmeübergangs zwischen den Gasströmen und dem Stein besitzt der Hohlstein (7) im Bereich seiner Grundfläche (10) und seiner Deckfläche (11) unterschiedliche Wandstärken, und der Kanal (8) weist im Bereich der Grundfläche (10) und der Deckfläche (11) unterschiedliche Querschnitte auf, wobei sich Kanal (8) vorzugsweise in Richtung von der Grund- zur Deckfläche erweitert.

0107229

## Feuerfester, prismatischer Hohlstein für den Gitterbesatz der Kammern regenerativ beheizter Öfen

Die Erfindung bezieht sich auf einen feuerfesten, prismatischen Hohlstein für den Gitterbesatz der Kammern regenerativ beheizter Öfen, insbesondere Glasschmelzöfen, welcher eine - vorzugsweise scharfkantige - achteckige und mit in Richtung der Hauptachsen dieser Fläche verlaufenden Erhebungen und dazu korrespondierenden Vertiefungen versehene Grund- und Deckfläche und koaxial zur Längsachse einen durchgehenden Kanal mit einem rechteckigen, gegebenenfalls abgerundete oder abgeschrägte Ecken aufweisenden Querschnitt besitzt.

Derartige Hohlsteine sind z.B. durch die AT-PS 365 545 bekannt und haben sich bewährt, da es aufgrund ihrer Formgebung möglich ist, aus ihnen einen stabilen Gitterbesatz der Kammern von Glasöfen aufzubauen und dabei die Wandstärke der Steine so weit zu verringern, daß praktisch das ganze Steinvolumen zur Wärmespeicherung dienen kann. Zu diesem Zweck wurde ein hydraulischer Durchmesser des Kanals von 120 bis 200 mm vorgesehen und die Wandstärke derart bemessen, daß die Beziehung: hydraulischer Durchmesser geteilt durch die in Richtung der parallel zur Grund- und/oder Deckfläche verlaufenden Hauptachsen gemessene Wandstärke des Steines einen zwischen 3 bis 5 liegenden Wert ergibt. Beispielsweise beträgt die Wandstärke 40 mm, wogegen die früher verwendeten Rechtecksteine zur Erzielung eines stabilen Gitteraufbaus eine Dicke von 60 mm und mehr aufweisen mußten, wobei das Steininnere durch die Abgase nicht erwärmt werden konnte und daher nichts zur Wärmespeicherung beitrug.

Durch entsprechende Formgebung der genannten Hohlsteine wurde versucht, eine gewisse Verwirbelung der durchströmenden Gase und damit einen besseren Wärmeübergang zu erreichen. Beim Betrieb von Glasöfen, deren Kammern eine aus solchen Steinen aufgebaute Gitterung aufweisen, hat sich aber gezeigt, daß das Abgas bzw. die Frischluft im wesentlichen laminar durch die Kanäle der Gitterung strömt, wie dies auch bei aus Rechtecksteinen oder aus Kreuzsteinen aufgebauten Gitterungen der Fall ist.

Aufgabe der Erfindung ist es, einen Hohlstein der eingangs erwähnten Art zu schaffen, der einen verbesserten Wärmeübergang von den Abgasen auf den Stein bzw. von diesem auf die Frischluft gewährleistet.

Erfindungsgemäß wird dies dadurch erreicht, daß der Hohlstein im Bereich seiner Grund- und seiner Deckfläche unterschiedliche Wandstärken besitzt und der Kanal im Bereich der Grund- und der Deckfläche unterschiedliche Querschnitte aufweist. Auf diese Weise entstehen beim Aufbau des Gitterbesatzes bei jeder Lage dieser Hohlsteine den Querschnitt der Kanäle sprunghaft ändernde Vor- bzw. Rücksprünge, durch die es zu einer Störung der durch diese strömenden Gase und somit zu Verwirbelungen kommt, die den Wärmeaustausch zwischen Gas und Stein bzw. umgekehrt verbessern.

Nach einem weiteren Merkmal der Erfindung ist vorgesehen, daß sich der Kanal erweitert, vorzugsweise in Richtung von der Grund- zur Deckfläche hin. Durch diese Maßnahmen lassen sich auf sehr einfache Weise die erforderlichen unterschiedlichen Wandstärken im Bereich der Grund- bzw. der Deckfläche erzielen. So können diese Steine mit relativ einfach geformten Werkzeugen hergestellt werden.

Um eine kräftige Verwirbelung der durch die Kanäle strömenden Gase zu gewährleisten, ist es vorteilhaft, wenn sämtliche Wände des Kanals mit der Grundfläche gleich große Winkel einschließen. Dadurch werden über den ganzen Umfang eines jeden Kanals Verwirbelungen induziert.

Im Hinblick auf eine für die Lebensdauer der Steine günstige, möglichst gleiche Wandstärke und damit auch einfache Verhältnisse beim Pressen der Steine einerseits und eine kräftige Verwirbelung der durchströmenden Gase anderseits, hat es sich als vorteilhaft erwiesen, wenn der Unterschied in der Wanddicke des Steines im Bereich seiner Deck- und seiner Grundfläche 5 bis 15 mm beträgt, bei einer Steinhöhe von rund 150 mm.

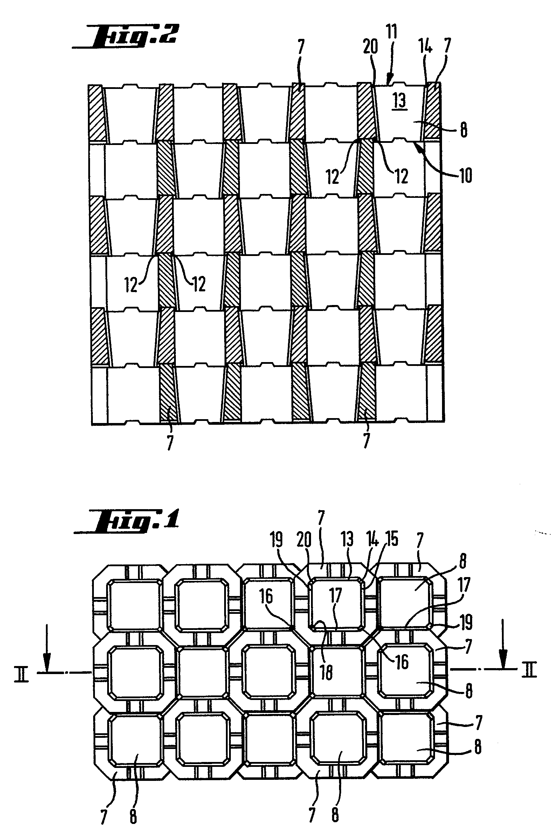

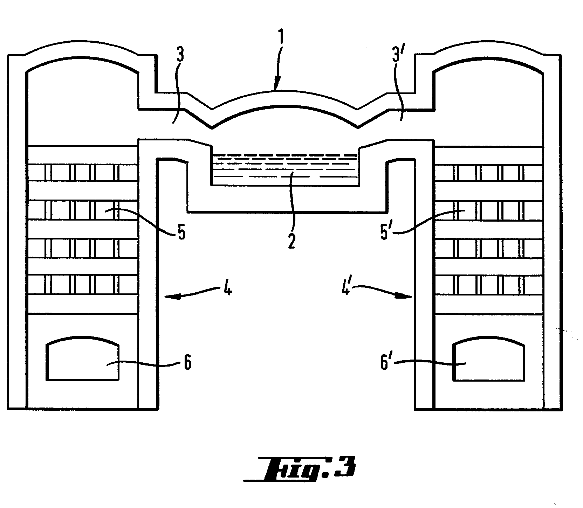

Die Erfindung wird nun an Hand der Zeichnung näher erläutert. Dabei zeigen Fig. 1 eine Draufsicht auf einen Gitterbesatz mit erfindungsgemäßen Steinen, Fig. 2 einen Schnitt durch den Gitterbesatz nach der Linie II-II in Fig. 1 und Fig. 3 ein Schema eines Glasschmelzofens.

Gemäß Fig. 3 beinhaltet die mit feuerfestem Material ausgekleidete Wanne 1 das Schmelzbad 2. Zu beiden Seiten der Wanne 1 führen Kanäle 3, 3', in denen nicht dargestellte Brenner angeordnet sind, zu den Kammern 4, 4', in denen jeweils ein Gitterbesatz 5, 5' angeordnet ist. Abgesehen von seinen Randzonen besteht jeder Gitterbesatz 5, 5' aus Steinen mit gleichen Abmessungen.

Im Betrieb wird nun zunächst die Wanne 1 bzw. das Schmelzbad 2 von dem in Kanal 3' angeordneten Brenner beheizt, wobei die Abgase über den Kanal 3 und durch den Gitterbesatz 5 geführt werden und dabei dessen Besatzsteine erwärmen. Sind diese genügend aufgeheizt, wird umgeschaltet und die Beheizung des Schmelzbades 2 erfolgt mittels des im Kanal 3 angeordneten Brenners, wobei die Verbrennungsluft über die Öffnung 6 in die Kammer 4 eintritt und durch den Gitterbesatz 5 unter Wärmeaufnahme streicht und die Abgase über den Kanal 3' in die Kammer 4' eintreten und diese nach dem Durchströmen des Gitterbesatzes 5', wobei sie Wärme an dessen Besatzsteine abgeben, über die Öffnung 6' verlassen. Nach dem Aufheizen des Gitterbesatzes 5' wird wieder umgeschaltet, wobei nun die Frischluft durch die Öffnung 6' in den Gitterbesatz 5' eintritt und die Abgase des im Kanal 3' nun im Betrieb befindlichen Brenners nach Durchströmen und Erwärmen des Gitterbesatzes 5 durch die Öffnung 6 austreten.

Wie aus Fig. 1 und 2 ersichtlich, weisen die erfindungsgemäßen Steine 7 eine achteckige äußere Umrißlinie und einen im Querschnitt viereckigen, zentralen, durchgehenden Kanal 8 auf. Werden nun die Steine 7 lagenweise versetzt aufeinander geschichtet, so entstehen vertikale Kanäle, die in einer Lage durch die Innenflächen der Kanäle 8 der Steine 7 und in der jeweils nächsten Lage durch die Außenflächen von vier aneinander angrenzenden Steinen 7 gebildet sind. Da die Außenflächen der Steine 7 lotrecht verlaufen, die Innenflächen der Kanäle 8 der Steine 7 aber gegen die Lotrechte geneigt sind, weil die Wandstärke eines jeden Steines 7 im Bereich seiner Grundfläche 10 und seiner Deckfläche 11 unterschiedlich ist und die Steine 7 somit unterschiedlich große Einlaß- und Auslaßöffnungen besitzen, ergeben sich im vertikalen Verlauf der so gebildeten Kanäle des Gitterbesatzes Vor- und Rücksprünge 12, die eine Verwirbelung der Gasströmung erzwingen und damit die Wärmeübertragung verbessern.

Zur Verwirbelung der Gasströme trägt weiters auch der Umstand bei, daß die Kanten des äußeren Umrisses der Steine 7 scharf, die des Kanals 8 eines jeden Steines der nächsten Lage dagegen abgeschrägt sind, wobei auch Abrundungen durchaus zweckmäßig sind. Dadurch entstehen in den Eckzonen der durchgehenden Kanäle des Gitterbesatzes zusätzliche vor- und zurückspringende Abschnitte, welche die Verwirbelung und den Wärmeübergang begünstigen.

Beim dargestellten Ausführungsbeispiel erweitert sich der Kanal 8 eines jeden Hohlsteines 7 von seiner Grundfläche zu seiner Deckfläche zu, wobei, wie aus Fig. 1 und 2 ableitbar ist, jede der Wände 13, 14, 15, 16, 17, 18, 19, 20 des Kanals 8 mit der Grundfläche den gleichen Winkel einschließt.

Die erfindungsgemäße Bauform der Hohlsteine kann bei allen für Gittersteine in Betracht kommenden feuerfesten Materialien angewendet werden. Als feuerfeste Materialien eignen sich besonders Magnesia, Chromerz, Magnesiumaluminiumspinell, Tonerde und Mischungen dieser Stoffe sowie Forsterit oder Chamotte. Auch Sinter- oder Schmelzkornmaterialien aus den genannten Mischungen, z.B. aus Magnesiachromerz, können gewünschtenfalls verwendet werden.

Zur weiteren Verstärkung der Verwirbelung der Gasströme können die erfindungsgemäßen Hohlsteine auch mit Öffnungen oder Durchbrüchen in den Seitenwänden versehen sein, wie dies in der AT-PS 372 364 beschrieben ist.

PATENTANSPRÜCHE :

1.　Feuerfester, prismatischer Hohlstein für den Gitterbesatz der Kammern regenerativ beheizter Öfen, insbesondere Glasschmelzöfen, welcher eine - vorzugsweise scharfkantige - achteckige und mit in Richtung der Hauptachsen dieser Fläche verlaufenden Erhebungen und dazu korrespondierenden Vertiefungen versehene Grund- und Deckfläche und koaxial zur Längsachse einen durchgehenden Kanal mit einem rechteckigen, gegebenenfalls abgerundete oder abgeschrägte Ecken aufweisenden Querschnitt besitzt, d a d u r c h　g e k e n n z e i c h n e t, daß der Hohlstein (7) im Bereich seiner Grund- und seiner Deckfläche (10, 11) unterschiedliche Wandstärken besitzt und der Kanal (8) im Bereich der Grund- (10) und der Deckfläche (11) unterschiedliche Querschnitte aufweist.

2.　Hohlstein nach Anspruch 1, d a d u r c h　g e k e n n z e i c h n e t, daß sich der Kanal (8) erweitert, vorzugsweise in Richtung von der Grund- (10) zur Deckfläche (11) hin.

3.　Hohlstein nach Anspruch 2, d a d u r c h　g e k e n n z e i c h n e t, daß sämtliche Wände (13 bis 20) des Kanals (8) mit der Grundfläche (10) gleich große Winkel einschließen.

4.　Hohlstein nach einem der Ansprüche 1 bis 3, d a d u r c h　g e k e n n z e i c h n e t, daß der Unterschied in der Wanddicke des Steines im Bereich seiner Deck- und seiner Grundfläche 5 bis 15 mm beträgt, bei einer Steinhöhe von rund 150 mm.

0107229

**Fig.2**

**Fig.1**

0107229

**Fig.3**

Europäisches
Patentamt

**EUROPÄISCHER RECHERCHENBERICHT**

**0107229**
Nummer der Anmeldung

EP 83 20 1401

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-2 042 705 (VEITSCHER MAGNESITWERKE AG) * Ansprüche; Figuren * | 1 | F 27 D 1/04 C 03 B 5/23 F 28 F 21/04 F 28 D 17/02 |
| | --- | | |
| Y | BE-A- 364 167 (O. STACK) * Insgesamt * | 1-3 | |
| | --- | | |
| Y | DE-C- 935 924 (C.C.E.M. GERIN) * Insgesamt * | 1-3 | |
| | --- | | |
| Y | DE-C- 960 489 (K. PAULSEN) * Ansprüche; Figuren * | 1,2 | |
| | --- | | |
| Y | DE-A-1 949 996 (WESTOFEN GmbH) * Ansprüche; Figuren * | 1 | |
| | ----- | | **RECHERCHIERTE SACHGEBIETE (Int. Cl. ³)** |
| | | | F 27 B F 27 D C 03 B F 28 F F 28 D |

Der vorliegende Recherchenbericht wurde für alle Patentansprüche erstellt.

| Recherchenort | Abschlußdatum der Recherche | Prüfer |
|---|---|---|
| DEN HAAG | 18-01-1984 | COULOMB J.C. |